# EUROPEAN PATENT APPLICATION

(11) **EP 1 335 530 A1**
(43) Date of publication of application: **13.08.2003**
(21) Application number: 02360063.8
(22) Date of filing: 12.02.2002
(51) Int. Cl.: H04L 12/28, H04Q 7/38

(54) **Method for providing a macro-diversity for a dual-mode radio communication terminal**

(71) Applicant: Evolium S.A.S., 75008 Paris (FR)
(72) Inventor: Fiat, Lionel, 92100 Boulogne Billancourt (FR)
(74) Representative: Urlichs, Stefan, Dipl.-Phys.

(57) **Abstract**

The invention relates to a method for connecting a terminal over an access network, herein called local access network, to the core part of a radio communication network

According to the invention, the method comprises the steps of:
- interfacing over a gateway (14) said local access network (12) to an entity (101, 102) of said core network (10), said entity (101, 102) being the element of said core network (10) which would be contacted for establishing a connection with said terminal (13) over said dedicated radio access network (11);
- Performing at said gateway (14) a protocol stack translation for mapping protocols used in said local access network (12) to protocols used in said entity (101, 102) of said core network;
- Controlling the connection over said local access network (12) by said core network (10).

## Description

### BACKGROUND OF THE INVENTION

The present invention relates to access networks and more precisely to a method for connecting a terminal over an access network to the core part of a radio communication network to provide fixed mobile convergence for end-users.

Known in the art is a terminal supporting simultaneously GSM and DECT protocol stacks. At home, the terminal can use the DECT standard on the air interface to establish a telephone call, the call being further routed in the PSTN. On the move, the terminal will use the GSM network to establish a communication. Such terminals provide a fixed/mobile convergence in that the appropriate communication network is automatically chosen depending on the availability of a communication over the DECT interface.

This solution presents the drawback that the terminal should be addressed over different phone numbers depending on the used radio access network (GSM or DECT air interface). Moreover, the different services proposed to the terminal depend on the network. Furthermore, no handover is available between the different access networks since no central entity accessible by both access networks contains the user profile. As a consequence, the terminal has to reinitialize completely the activated sessions when changing of access network.

A particular object of the present invention is to provide a method for unifying the services proposed to a terminal able to establish a communication over different access networks.

Another object of the invention is to provide a gateway between a radio access network and the core network of a radio communication network to perform the above mentioned method.

### SUMMARY OF THE INVENTION

These objects, and others that appear below, are achieved by a method for connecting a terminal over an access network, herein called local access network, to the core part of a radio communication network according to claim 1, a gateway according to claim 4, a terminal according to claim 5, and an entity of the core network of a radio communication network according to claim 8.

According to the present invention, a unique core network controls the communications to and from a terminal whatever the used access network. A gateway is provided for ensuring the protocol translation between the access network and the core network.

The method according to the present invention presents the advantage to provide unified services over all available interfaces of the terminal.

Another advantage of the invention is to provide services controlled by the core access network making the best of the functionality of all access networks available to communicate with a predefined terminal. Possible services are selection of the most appropriate access network according to access network profiles stored in the core network, hand-over procedure between the different access networks, macro-diversity over the different possible access networks since a unique core network will process the data from all access networks.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a first system supporting the method according to the present invention;
- Figure 2 shows an example of protocol stack at a gateway according to the present invention between an access network and a core network;
- Figure 3 shows a second system supporting the method according to the present invention.

### DETAILED DESCRIPTION OF THE INVENTION

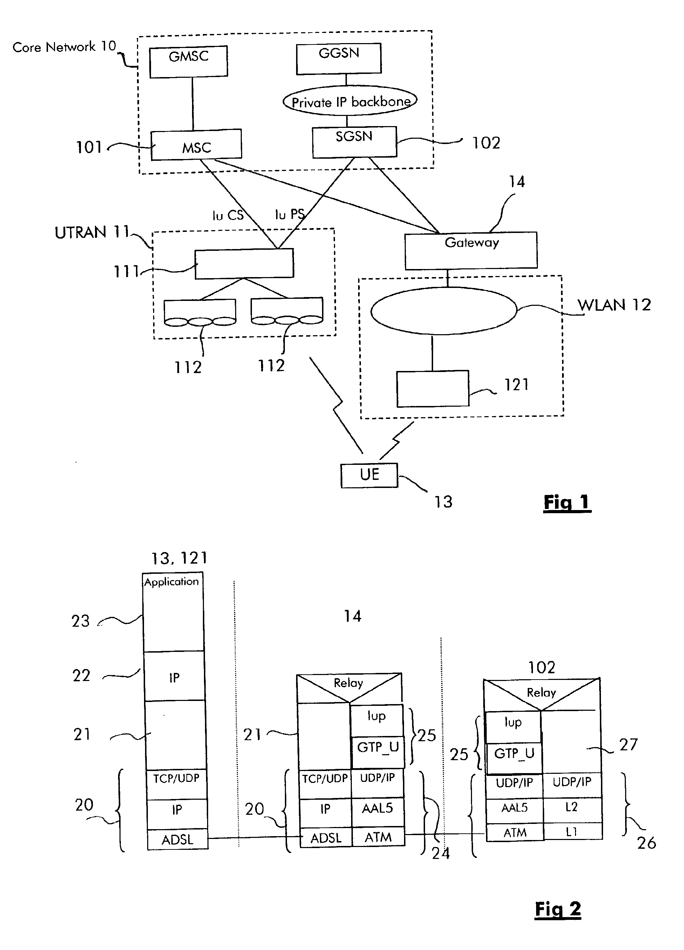

Figure 1 shows a system where the method according to the present invention can be implemented. The system comprises a core network 10, a first access network, herein called dedicated radio access network 11, a second access network, herein called local access network 12, and a mobile terminal 13.

Core network 10 and dedicated radio access network 11 are preferably part of a known cellular radio communication network for example GSM/GPRS or UMTS.

Local access network 12 being in this embodiment of the invention a wireless local access network based on ADSL technology. Other possible types of access networks may be envisaged in the framework of the invention such as a wireless LAN based on Ethernet. Access network may also be a fixed access network for example a fixed LAN based on Ethernet, mobile terminal 13 being connectable over a short range wireless interface to a local node of said fixed LAN.

It will be clear for a person skilled in the art how to transpose the present invention to such types of access networks.

Core network 10 comprises at least one mobile switching center MCS 101 for handling circuit switched traffic and at least one Serving GPRS Support Node SGSN 102 for handling packet switched traffic. Core network 10 could in a restricted embodiment of the invention support only circuit switched or only packet switched traffic. MSC, SGSN are related to GSM/GPRS and UMTS core network, they can be replaced by other entities if another type of core network is considered.

MSC 101 and SGSN 102 are, in this invention, the entities of core network 10, dedicated radio access network 11 is directly connected to. In other words, from terminal 13 point of view, MCS 101 and SGSN 102 are the local entities of core network 10. Furthermore, core network 10 can comprise further networked GMSC and GGSN as known in usual radio communication networks.

Core network 10 and more precisely MCS 101 and SGSN 102 are connected over predefined interfaces to dedicated radio access network 11. If dedicated radio access network 11 is an UMTS Terrestrial Radio Access Network (UTRAN), the interfaces to the core network being respectively standardized lu CS and lu PS interfaces.

Dedicated radio access network 11 comprises a radio network controller RNC 111 and Node Bs 112 serving terminals 13 under their range.

Local access network 12 is preferably a private network as a wireless local access network or a wireless private branch exchange to which terminal 13 can connect. Optionally, terminal 13 can connect to the wireless LAN 12 over a local node 121, using for example the Bluetooth technology. Local node 121 ensures the translation of the protocol used over the air interface to the protocols used in the wireless LAN 12. In another embodiment of the present invention entity 121 may also be a private local area network. This embodiment enables it to increase the number of terminals type which can connect to the wireless LAN 12 even if they do not support the same technology as the wireless LAN 12.

According to the present invention, local access network 12 is connected to core network 10 over a local gateway 14. Local gateway 14 ensures the protocol stack translation between the communication protocols used in local access network 12 and the protocols used in core network 10 for example protocols defined in the UMTS standard. The protocol stack translation will be explained in more details below. Gateway 14 can preferably be connected to MSC 101 as well as to SGSN 102.

As a consequence, no matter if a call to/from terminal 13 is performed over dedicated radio access network 11 or over access network 12, the call is controlled by the same entity 101, 102 in core network 10. The same services and functionality are available for the call no matter which access network 11 or 12 is used.

Since a single central entity 101, 102 in core network 10 controls the call for both access networks 11 and 12, unified services can be provided to terminal 13 independently on the used access network 11, 12.

Example for such services are:
Choice of the most appropriate access network. A feature possible with the network structure according to the invention is to select the used access network according to user requirements. Indeed, for dedicated radio access network 11 taken as standardized UTRAN the maximum possible data throughput is 2Mbit/s. Higher data throughput may be reached over local access network as a wireless LAN for example.

For this purpose, an entity in core network 10 should stored information concerning the capabilities of both access network 11, 12 in term of QoS and throughput: information on the maximum data throughput and on the quality of service may be stored by both access networks 11, 12 in the core network 10 for example at MCS 101 or SGSN 102. In the following the control of the access network will be supposed to be performed at MSC 101 resp. SGSN 102. It will be clear for a person skilled in the art that another entity of core network 10 may be used for this purpose.

Upon connection request from terminal 13 indicating a requested quality of service or a requested throughput, core network 10 or preferable MCS 101 or SGSN 102 may check which of the access network 11, 12 is the best adapted to fulfill these conditions and transmit this information to terminal 13 in order it gets connected over the best adapted access network 11, 12. Preferably, MSC 101 or SGSN 102 can manage several simultaneous calls to or from terminal 13 over different access networks.

In a possible embodiment of the present invention, the connection request phase may use local access network 12 while the data exchange phase will use the best appropriate access network as identified in the core network.

This feature is preferably carried out with standard Inter System change procedures between terminal 13 and core network 10 using common location management procedures.

Handover between two access networks . The core network can be informed of the possibility to start an handover. As a consequence, terminal 13 currently communicating over an access network 11, 12 will change the used access network 11, 12. This notification is made by means of core network signalling to terminal 13.

For this purpose MSC 101, or SGSN 102 should be able to distinguish information received from the different radio access networks 11, 12. A possible solution could be to manage different links, one for data coming from local access network 12 and one for data coming from dedicated radio access network 11.

Macro-diversity . This consists in sending/receiving simultaneously the same data over both radio access networks 11, 12 and combining them at reception. Macrodiversity can be implemented in the uplink (terminal to network direction) for this purpose terminal 13 should support simultaneous communication over several communication stacks. Macro diversity can as well be implemented in the downlink (network to terminal direction) for this purpose terminal 13 should comprise means for combining information received from core network 10 over local access network and over dedicated radio access network 11.

At network side, SGSN 102 or the MSC 101 should be equipped means for reconstructing data received in macrodiversity. Such means are known in the art and usually implemented in Radio Network controllers. Implementing such means in MSC 101 or SGSN 102 can be performed without problem by a man skilled in the art according to the leanings of the present invention.

Figure 2 shows an example of a protocol stack according to the present invention at gateway 14 for packet switched traffic. Moreover, figure 2 shows the protocol stacks at terminal 13 and the protocol stacks at SGSN 102.

It will be clear for a person skilled in the art that the protocol stack can be adapted to a gateway between the local access network 122 and MSC 101 in case of circuit switched traffic.

Moreover, figure 2 describes the protocol translation for the user plane i.e. the user data. Similarly, a protocol encapsulation is to be performed for the signaling plane between terminal and the gateway (comprising access network resource control signaling and core network signaling). The protocol encapsulation for the signaling plane will not be further described but can be deduced without difficulty from the standardized signaling protocol in the UMTS radio access network 11 and from the above described protocol translation for the user plane.

The protocol stack at terminal 13 is characteristic of access network 12. In this embodiment, access network 12 is a wireless LAN using ADSL transport technology. Then, the protocol stack at terminal 13 comprises following lower layers 20 according to the ISO OSI layer model.
- Layer 1/2: ADSL
- Layer 3: IP
- Layer 4: TCP/UDP
   On the top of the layers related to access network 12, a layer 21 supports a tunneling protocol. This tunneling protocol may be the GPRS Tunneling Protocol or any equivalent tunneling protocol. This tunneling encapsulates IP packets generated at layer 22, the IP packets contain application data generated at layer 23. Application data may be user data as well as signaling data. Moreover other ISO OSI layer 3 protocol data units may replace the IP packets.
   SGSN 102 comprises two parallel layers stacks with a relay layer on the top of them for operating a protocol translation between the access network and the core network compliantly to the UMTS standards.
   At the interface to gateway 14, following layers are implemented
- Layer 1: ATM
- Layer 2: AAL5
- Layer 3: UDP/IP. These three layers 24 correspond to the lower layers used in UTRAN.
- Layer 4/5: layers 25 i.e. tunneling protocol corresponding to GPRS Tunneling protocol and lup protocol also used in UTRAN.

At the interface to core network following layer are implemented
- Layer 1 to 3: core network specific layers 26
- Layer 4: Tunneling protocol 27 corresponding to GPRS Tunneling protocol.

The local gateway 14 supports according to the present invention a protocol translation between the protocol stack used in access network 12 and the protocol stack used in the core network 10 interface. As a consequence, gateway 14 comprises two parallel layers stacks with a relay layer on the top of them for operating the protocol translation between access network 12 side and the core network side interface protocols.

At access network 12 side, following layers are implemented
- Lower layers 20
- Layer 4: tunneling protocol 21

At core network side, following layers are implemented
- Layer 1: ATM
- Layer 2: AAL5
- Layer 3: UDP/IP. These three layers 24 correspond to the lower layers used in UTRAN.
- Layer 4/5: layers 25 i.e. tunneling protocol corresponding to GPRS Tunneling Protocol and lup protocol also used in UTRAN

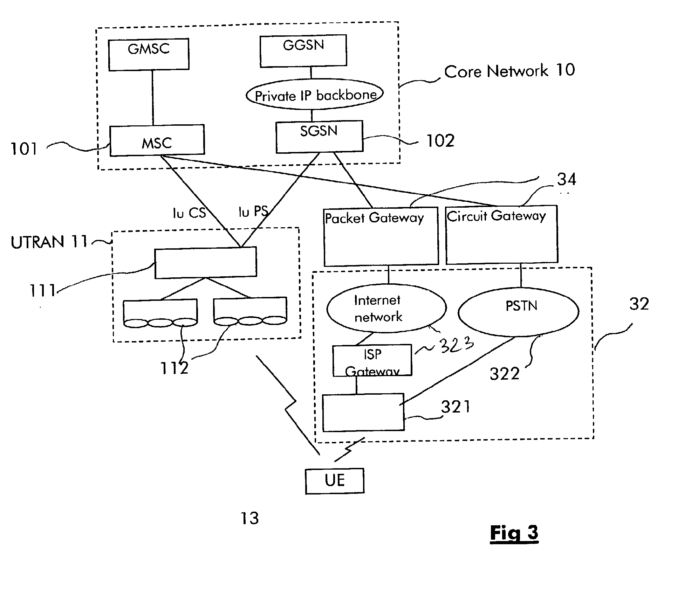

Figure 3 shows a second embodiment of a system supporting the method according to the present invention.

The system comprises a core network 10, a dedicated radio access network 11, a local access network 32 and a mobile terminal 13.

Core network 10, dedicated radio access network 11 have already been described in combination with figure 1.

In this embodiment, local access network 12 uses as transport network a PSTN network accessible by terminal 13 over a wireless interface. Such interfaces may be Bluetooth based or infrared based or an interface compatible with DECT standard.

Local access network 32 is preferably a PSTN 322 for circuit switched data or the PSTN interconnected with the Internet 323 for packet data. Terminal 13 can connect over a local node or a local area network 321 using for example the Bluetooth technology to local access network 32.

According to the present invention, local access network 32 is connected to core network 30 over a gateway 34. Gateway 34 ensures the protocol stack translation between the communication protocols used in local access network 32 and the protocols used in core network 10. Two different gateways 14 are used for circuit switched data coming from the PSTN 322 and for packet data coming from the Internet 323. The two different gateways 14 ensure the appropriate protocol translations on the one hand from the PSTN 322 and on the other hand from the Internet 323.

Then no matter if a call to/from terminal 13 is performed over dedicated radio access network 11 or over access network 32, the call is controlled from the same core network 10. The same services (handover, macrodiversity, radio access network selection) are available for the call no matter which access network 11 or 32 is used.

## Claims

1. Method for connecting a terminal (13) over an access network (12), herein called local access network, to the core part (10) of a radio communication network, said radio communication network comprising said core network (10) and a dedicated radio access network (11) different from said local access network (12), said method comprising the steps of:
- interfacing over a gateway (14) said local access network (12) to an entity (101, 102) of said core network (10), said entity (101, 102) being the element of said core network (10) which would be contacted for establishing a connection with said terminal (13) over said dedicated radio access network (11);
- performing at said gateway (14) a protocol stack translation for mapping protocols used in said local access network (12) to protocols used in said entity (101, 102) of said core network;
- controlling the connection over said local access network (12) by said core network (10).

2. Method according to claim 1, in that said local access network (12) is a wireless LAN.

3. Method according to claim 1, in that said local access network (32) is a Wide Area Network (WAN) as Public Switched Telephonic network or the Internet.

4. Gateway (14, 34) between a local access network (12) and an entity (101, 102) of the core network (10) of a radio communication network, said radio communication network comprising said core network (10) and a dedicated radio access network (11) different from said local access network (12), said gateway (14, 34) comprising:
- means for performing a protocol stack translation between a communication protocol stack used in said local access network (12, 32) and said communication protocols used in said entity (101, 102) of said core network (10);
- means for receiving control information from said core network (10) destined to a terminal (13) connectable to said core network over said local access network.

5. Terminal (13, 121) comprising means to connect over an access network (11) to the core network (10) of a radio communication network, said access network (11) being a dedicated radio access network of said radio communication network, said terminal being **characterised in that** it further comprises
- means for connecting to the core network (10) of said radio communication network over a second access network(12), herein called local access network, different from said dedicated radio access network (11);
- means for addressing a gateway (14, 34) interfacing said local access network (12) with an entity (101, 102) of said core network (10).

6. Terminal (13, 121) according to claim 5, comprising a first protocol stack with lower layers (20) adapted to access said local access network (12) and a second stack with lower layers adapted to access said dedicated radio access network (11), said terminal further comprising
- means for selecting said local access network (12) or said dedicated radio access network (11) for communication with said core network (10);
- means for performing macrodiversity by combining data received from / sent to said local access network (12) with data received from / sent to said dedicated radio access network (11).

7. Terminal (13, 121) according to claim 6, comprising two physical entities, a wireless terminal (13) and a local node (121), said local node (121) being connected to said local access network (12) and said wireless terminal (13) being connectable to said local node (121) over a short range wireless connection or by wire.

8. Entity (101, 102) of the core network (10) of a radio communication network, comprising means for communicating with a first radio―access network (11), herein called dedicated radio access network and means for communicating with a second access network (12), herein called local access network, different from said dedicated radio access network (11) over a gateway (14, 34), said entity (101, 102), further comprising:
- means for selecting between said local access network (12) and said dedicated access network(11) for communicating with a terminal (13);
- means for performing macrodiversity by combining data received from / sent to said local access network (12) with data received from / sent to said dedicated radio access network (11).
